# EUROPÄISCHE PATENTANMELDUNG

(11) **EP 1 961 499 A1**
(43) Veröffentlichungstag der Anmeldung: **27.08.2008**
(21) Anmeldenummer: 07405054.3
(22) Anmeldetag: 22.02.2007
(51) Int. Cl.: B21C 35/02

(54) **Vorrichtung zum Ineinanderlegen von zwei Profilen**

(71) Anmelder: Alcan Technology & Management Ltd., 8212 Neuhausen am Rheinfall (CH)
(72) Erfinder: Klaus, Alexander, 42327 Wuppertal (DE)

(57) **Zusammenfassung**

Eine Vorrichtung zum Ineinanderlegen von zwei Profilen (40, 50) mit einem offenen Querschnitt, insbesondere mit einem im wesentlichen U-förmigen Querschnitt, zeichnet sich aus durch zwei über eine gemeinsame Schwenkachse (x) gelenkig miteinander verbundene Schwenkkörper (12, 22) mit je einer Auflage (14, 24) mit im wesentlichen horizontaler Auflagefläche (16, 26) und mit je einem Anschlag (18, 28) mit im wesentlichen rechtwinklig zur Auflagefläche (14, 24) stehender Anschlagfläche (20, 30) für je ein Profil (40, 50), wobei jeder Anschlag (18, 28) zwischen Auflage (14, 24) und Schwenkachse (x) angeordnet ist und die Schnittlinien der Auflageflächen (14, 24) mit den Anschlagflächen (20, 30) parallel zur Schwenkachse (x) liegen. Die Vorrichtung verhindert die Gefahr von mechanischen Beschädigungen beim Ineinanderlegen von zwei Profilen mit offenem Querschnitt.

## Beschreibung

### Technisches Gebiet

Die Erfindung betrifft eine Vorrichtung zum Ineinanderlegen von zwei Profilen (40, 50) mit einem offenen Querschnitt, insbesondere mit einem im wesentlichen U-förmigen Querschnitt.

### Stand der Technik

Beim Strangpressen von Aluminiumlegierungen entstehen längliche Werkstücke in der Form von Profilen einer Länge von z.B. 6 m, die zur Durchführung einer nachfolgenden Wärmebehandlung in einem Glühofen. Da die Glühöfen nur eine begrenzte Anzahl von Käfigen laden können, besteht die Notwendigkeit, die Käfige mit einer maximalen Anzahl von Profilen zu füllen. Dazu werden einzelne Profile nebeneinander auf Querträger (Zwischenlagen) gelegt. Auf diesen Querträgern werden ganze Lagen von Profilen in den Käfig gelegt und übereinander gestapelt.

Besondere Profilformen, die einen offenen Querschnitt aufweisen, wie z.B. Profile mit U-förmigem Querschnitt, benötigen ein grosses Volumen im Käfig. Derartige Profile können jedoch auch paarweise ineinander gelegt werden. Auf diese Weise passen doppelt so viele Profile wie normal in einen Käfig.

Derzeit werden in manchen Fällen Profile manuell ineinander gelegt. Eine automatische mechanische Lösung ist nicht bekannt. Ein wesentlicher Nachteil einer automatischen Dreheinrichtung wird darin gesehen, dass Profile nur an den Enden gepackt werden können. Dann hängen die Profile jedoch aufgrund ihres Eigengewichts stark durch und erschweren das Ineinanderlegen. Hintereinander liegende, kurze Profile (z.B. 2 x 3 m statt 1 x 6 m) lassen sich auf diese Weise überhaupt nicht ineinander legen. Auch dürfen die Profile durch das Greifen an den Enden nicht beschädigt werden, was die Aufgabe erschwert.

### Darstellung der Erfindung

Der Erfindung liegt die Aufgabe zugrunde, eine Vorrichtung zu schaffen, mit der zwei Profile mit offenem Querschnitt ohne Gefahr von mechanischen Beschädigungen ineinander gelegt werden können.

Zur erfindungsgemässen Lösung der Aufgabe führt eine Vorrichtung mit zwei über eine gemeinsame Schwenkachse gelenkig miteinander verbundenen Schwenkkörpern mit je einer Auflage mit im wesentlichen horizontaler Auflagefläche und mit je einem Anschlag mit im wesentlichen rechtwinklig zur Auflagefläche stehender Anschlagfläche für je ein Profil, wobei jeder Anschlag zwischen Auflage und Schwenkachse angeordnet ist und die Schnittlinien der Auflageflächen mit den Anschlagflächen parallel zur Schwenkachse liegen.

Mit der erfindungsgemässen Vorrichtung werden die mit ihrem Bodenstreifen auf der Auflage liegenden Profile über die gesamte Länge von unten gestützt. Anstatt ein erstes Profil liegen zu lassen und das zweite Profil um 180° in das erste Profil zu schwenken, werden beide Profile um jeweils 90° zueinander gedreht und dann gemeisam um 90° zurückgedreht.

Damit die Vorrichtung für eine Vielzahl von Profilen mit unterschiedlichen Querschnittdimensionen einsetzbar ist, kann wenigstens eine Auflage mit ihrer Auflagefläche höhenverstellbar und wenigstens ein Anschlag mit seiner Anschlagfläche quer zur Schwenkachse verschiebbar ausgebildet sein.

Die beiden Schwenkkörper sind bevorzugt um einen Winkel von je 90° aus einer horizontalen Offenstellung in eine vertikale Schliessstellung verschwenkbar.

Zum Ineinanderlegen von zwei Profilen mit einem offenen Querschnitt, insbesondere mit einem im wesentlichen U-förmigen Querschnitt, mit der erfindungsgemässen Vorrichtung wird je ein Profil auf die Auflagefläche jeder Auflage aufgelegt und in Anlage mit der Anschlagfläche jedes Anschlages gebracht. Die beiden Schwenkkörper werden sodann um einen Winkel von je 90° um die Schwenkachse aus einer horizontalen Offenstellung in eine vertikale Schliessstellung verschwenkt. Anschliessend wird die Vorrichtung um einen Winkel von 90° aus einer vertikalen Lage in eine horizontale Lage gekippt und der oben liegende Schwenkkörper um einen Winkel von 180° um die Schwenkachse in die horizontale Offenstellung zurück verschwenkt. Die nun ineinander liegenden Profile werden aus der Vorrichtung entfernt.

Die erfindungsgemässe Vorrichtung eignet sich insbesondere zum schonenden Ineinanderlegen von stranggepressten Profilen aus Aluminium oder einer Aluminiumlegierung, wobei die ineinander liegenden Profile nach dem Entfernen aus der Vorrichtung in einen Glühkäfig überführt werden.

Zur Vermeidung von Oberflächenbeschädigungen der Profile können vor dem Verschwenken der beiden Schwenkkörper in die vertikale Schliessstellung flexible Schutzstreifen, beispielsweise in der Form textiler Streifen oder Kunststofffolienstreifen zwischen die Profile eingelegt werden.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Querschnitt durch eine mit zwei U-Profilen beladenen Einlegevorrichtung in horizontaler Offenstellung;
- Fig. 2 - 5: die vier aufeinander folgenden Stellungen der Einlegevorrichtung von Fig. 1 beim Ineinanderlegen von zwei U-Profilen: horizontaler Offenstellung (Fig. 2) - vertikale Schliessstellung (Fig. 3) - horizontale Schliessstellung nach 90° Drehung aus der vertikalen Schliessstellung (Fig. 4) - horizontale Offenstellung nach 180° Drehung aus der horizontalen Schliessstellung (Fig. 5);
- Fig. 6 a - e: den Verfahrensablauf beim Bereitstellen paarweise ineinander gelegter, stranggepresster U-Profile mit der Einlegevorrichtung von Fig. 1 zum Beladen eines Glühkäfigs;
- Fig. 7: einen Querschnitt durch einen Glühkäfig mit gestapelten, paarweise ineinander gelegten U-Profilen;
- Fig. 8: ein Paar ineinander gelegte U-Profile mit einem zwischen den Profilen angeordneten, flexiblen Schutzstreifen.

### Beschreibung von Ausführungsbeispielen

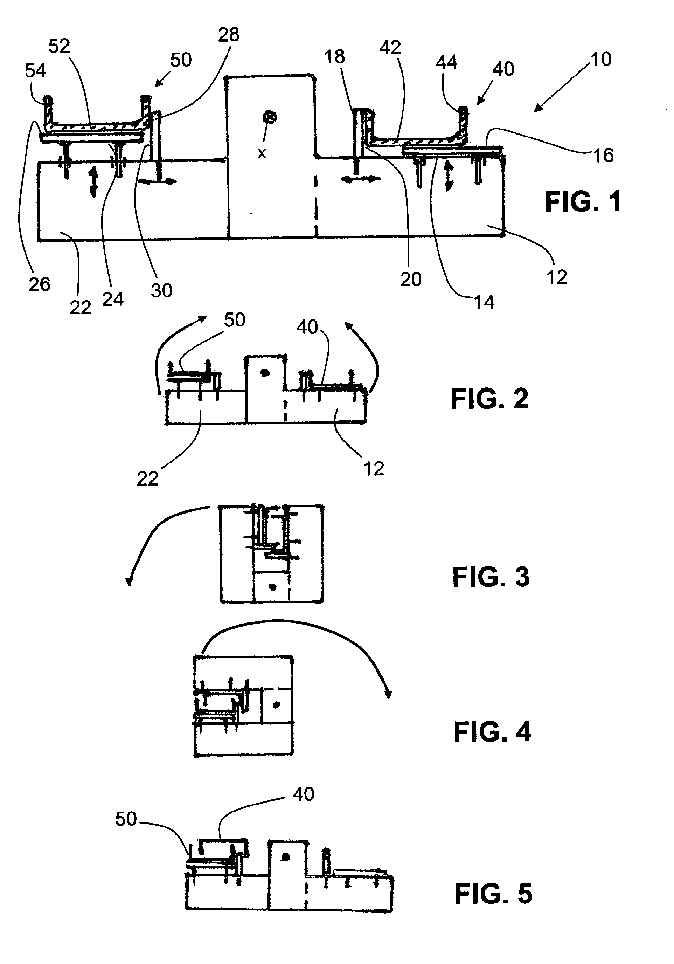

Eine in Fig. 1 gezeigte Einlegevorrichtung 10 weist zwei über eine gemeinsame horizontale Schwenkachse x gelenkig miteinander verbundene Schwenkkörper 12, 22 auf. Jedem Schwenkkörper 12, 22 ist eine höhenverstellbare Auflage 14, 24 mit einer Auflagefläche 16, 26 für ein Profil 40, 50 mit U-förmigem Querschnitt, nachfolgend als U-Profil bezeichnet, und jeder Auflage 14, 24 ein Anschlag 18, 28 mit einer rechtwinklig zur Auflagefläche 16, 26 angeordneten Anschlagfläche 20, 30 zugeordnet. Jeder zwischen der Auflage 14, 24 und der horizontalen Schwenkachse x positionierte Anschlag 18, 28 verläuft mit seiner Anschlagfläche 20, 30 parallel zur horizontalen Schwenkachse x der Schwenkkörper 12, 22 und ist auf dem Schwenkkörper 12, 22 quer zur horizontalen Schwenkachse x verschiebbar angeordnet.

Die beiden U-Profile 40, 50 liegen mit ihren Profillängsachsen parallel zur horizontalen Schwenkachse x auf den Auflageflächen 16, 26 der Auflagen 14, 24 und liegen den Anschlagflächen 20, 30 der beiden Anschläge 18, 28 an.

In der in Fig. 1 gezeigten, horizontalen Offenstellung der Einlegevorrichtung 10 liegen die Bodenstreifen 42, 52 der beiden U-Profile 40, 50 auf den horizontal ausgerichteten Auflageflächen 16, 26 und je ein Seitenstreifen 44, 54 der beiden U-Profile 40, 50 liegt der senkrecht positionierten Anschlagfläche 20, 40 des jeweiligen Anschlags 18, 28 an.

In den in den Fig. 2 - 5 gezeigten, aufeinender folgenden Positionen der Einlegevorrichtung 10 werden die beiden Schwenkkörper 12, 22 aus der horizontalen Offenstellung (Fig. 2) um je 90° zu der in Fig. 3 gezeigten vertikalen Schliesslage verschwenkt. Während dieses Schwenkvorgangs wechseln die Auflageverhältnisse der U-Profile 40, 50 bezüglich der Auflagen 14, 24 und Anschläge 18, 28 derart, dass nach Beenden des Schwenkvorgangs die Anschlagflächen 20, 30 der Anschläge 18, 28 in der vertikalen Schliesslage Auflageflächen für die nun auf einem ihrer Seitenstreifen 44, 54 liegenden U-Profile 40, 50 bilden. Entsprechend bilden nun die Auflageflächen 16, 26 der Auflagen 14, 24 Anschlagflächen für die Bodenstreifen 42, 52 der U-Profile 40, 50. Während des Schwenkvorgangs bleibt damit die Lagestabilität der beiden U-Profile 40, 50 erhalten.

Beim Verschwenken der beiden Schwenkkörper 12, 22 um die horizontale Schwenkachse x aus der horizontalen Offenstellung in die vertikale Schliesslage nähern sich die beiden U-Profile mit ihren offenen Seiten und greifen mit je einem Seitenstreifen 44, 54 zwischen die beiden Seitenstreifen 44, 54 des jeweils anderen U-Profils 40, 50. Die Schwenkachse x der beiden in der Art eines Scharniers miteinander verbundenen Schwenkkörper 12, 22 ist im überlappenden Scharnierbereich auf einer über über den Auflageflächen 16, 26 liegenden Höhe angeordnet, so dass die beiden Auflagen 14, 24 in der vertikale Schliessstellung den zur Aufnahme der Profile 40, 50 erforderlichen gegenseitigen Abstand aufweisen.

Im nachfolgenden Schritt wird die Einlegevorrichtung 10 aus ihrer vertikalen Schliessstellung (Fig. 3) im Gegenuhrzeigersinn um einen Winkel von 90° um die horizontale Schwenkachse x gedreht (Fig. 4). Anschliessend wird der oben liegende Schwenkkörper 12 im Uhrzeigersinn um einen Winkel von 180° um die horizontale Schwenkachse x gedreht und in die in Fig. 5 dargestellte, der Fig. 1 entsprechende, horizontale Offenstellung verschwenkt. Nach der Entnahme der ineinander liegenden U-Profile 40, 50 ist die Einlegevorrichtung 10 für den nächsten Einlegevorgang bereit.

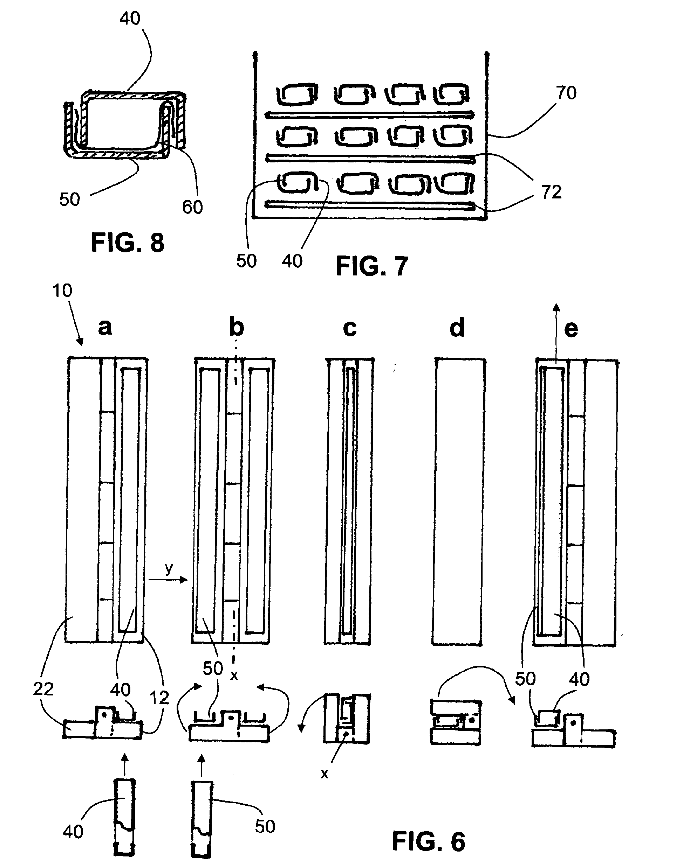

In den Figuren 6a - 6e ist der Verfahrensablauf beim Bereitstellen paarweise ineinander gelegter, stranggepresster U-Profile 40, 50 aus Aluminium oder einer Aluminiumlegierung zum Beladen eines in Fig. 7 gezeigten Glühkäfigs 70 dargestellt.

Die von einer in der Zeichnung nicht dargestellten Strangpressanlage erzeugten U-Profile 40, 50 werden nach dem Austritt aus der Matrize auf die gewünschte Länge abgelängt. Ein erstes U-Profil 40 wird auf die Auflage 14 des ersten Schwenkkörpers 12 aufgeschoben (Fig. 6a). Anschliessend wird die Einlegevorrichtung 10 durch Verschieben in Querrichtung y in eine zum Aufschieben des zweiten U-Profils 50 vorgesehene Position gebracht (Fig. 6b). Nach dem Aufschieben des zweiten U-Profils 50 auf die Auflage 24 des zweiten Schwenkkörpers 22 werden die beiden Schwenkkörper 12, 22 um je 90° zu der in Fig. 6c gezeigten, vertikalen Schliesslage verschwenkt, die Einlegevorrichtung 10 aus der vertikalen Schliesslage um einen Winkel von 90° im Gegenuhrzeigersinn in die horizontale Schliesslage (Fig. 6d) gedreht und durch Verschwenken des oben liegenden ersten Schwenkkörpers 12 um einen Winkel von 180° im Uhrzeigersinn in die horizontale Offenstellung (Fig. 6e) wieder geöffnet. Die ineinander gestapelten Profile 40, 50 werden aus der Einlegevorrichtung 10 ausgestossen und im bereitstehenden Glühkäfig 70 lagenweise unter Einfügung von Zwischenlagen 72 gestapelt.

Mit der beschriebenen Einlegevorrichtung 10 können stranggepresste U-Profile paarweise ineinander gelegt werden, ohne dass die Gefahr von mechanischen Beschädigungen durch gegenseitiges Zerkratzen der Profile besteht.

Um Oberflächenbeschädigungen vollständig auszuschliessen, können Schutzstreifen 60 aus einem beispielsweise textilen Material vor dem Ineinanderlegen der beiden U-Profile 40, 50 in eines der beiden Profile eingelegt werden (Fig. 8). Bei einem automatisierten Betrieb können die Schutzstreifen 60 auch automatisch zugeführt werden.

### Bezugszeichenliste

- 10: Einlegevorrichtung
- 12: erster Schwenkkörper
- 14: Auflage an 12
- 16: Auflagefläche von 14
- 18: Anschlag an 12
- 20: Anschlagfläche von 18
- 22: zweiter Schwenkkörper
- 24: Auflage an 22
- 26: Auflagefläche von 24
- 28: Anschlag an 22
- 30: Anschlagfläche von 28
- 40: erstes U-Profil
- 42: Bodenstreifen von 40
- 44: Seitenstreifen von 40
- 50: zweites U-Profil
- 52: Bodenstreifen von 50
- 54: Seitenstreifen von 50
- 60: Schutzstreifen
- 70: Glühkäfig
- 72: Zwischenlage
- x: horizontale Schwenkachse
- y: Querrichtung

## Patentansprüche

1. Vorrichtung zum Ineinanderlegen von zwei Profilen (40, 50) mit einem offenen Querschnitt, insbesondere mit einem im wesentlichen U-förmigen Querschnitt, **gekennzeichnet durch** zwei über eine gemeinsame Schwenkachse (x) gelenkig miteinander verbundene Schwenkkörper (12, 22) mit je einer Auflage (14, 24) mit im wesentlichen horizontaler Auflagefläche (16, 26) und mit je einem Anschlag (18, 28) mit im wesentlichen rechtwinklig zur Auflagefläche (14, 24) stehender Anschlagfläche (20, 30) für je ein Profil (40, 50), wobei jeder Anschlag (18, 28) zwischen Auflage (14, 24) und Schwenkachse (x) angeordnet ist und die Schnittlinien der Auflageflächen (14, 24) mit den Anschlagflächen (20, 30) parallel zur Schwenkachse (x) liegen.

2. Vorrichtung nach Anspruch 1, wobei wenigstens eine Auflage (14, 24) mit ihrer Auflagefläche (16, 26) höhenverstellbar und wenigstens ein Anschlag (18, 28) mit seiner Anschlagfläche (20, 30) quer zur Schwenkachse (x) verschiebbar ist.

3. Vorrichtung nach Anspruch 1 oder 2, wobei die beiden Schwenkkörper (12, 22) um einen Winkel von je 90° aus einer horizontalen Offenstellung in eine vertikale Schliessstellung verschwenkbar sind.

4. Verfahren zum Ineinanderlegen von zwei Profilen (40, 50) mit einem offenen Querschnitt, insbesondere mit einem im wesentlichen U-förmigen Querschnitt, mit einer Vorrichtung mit zwei über eine gemeinsame Schwenkachse (x) gelenkig miteinander verbundenen Schwenkkörpern (12, 22) mit je einer Auflage (14, 24) mit im wesentlichen horizontaler Auflagefläche (16, 26) und mit je einem Anschlag (18, 28) mit im wesentlichen rechtwinklig zur Auflagefläche (14, 24) stehender Anschlagfläche (20, 30) für je ein Profil (40, 50), wobei jeder Anschlag (18, 28) zwischen Auflage (14, 24) und Schwenkachse (x) angeordnet ist und die Schnittlinien der Auflageflächen (14, 24) mit den Anschlagflächen (20, 30) parallel zur Schwenkachse (x) liegen, **dadurch gekennzeichnet, dass** auf die Auflagefläche (16, 26) jeder Auflage (14, 24) je ein Profil (40, 50) aufgelegt und in Anlage mit der Anschlagfläche (20, 30) jedes Anschlages (18, 28) gebracht wird, die beiden Schwenkkörper (12, 22) um einen Winkel von je 90° um die Schwenkachse (x) aus einer horizontalen Offenstellung in eine vertikale Schliessstellung verschwenkt werden, die Vorrichtung um einen Winkel von 90° aus einer vertikalen Lage in eine horizontale Lage gekippt und der oben liegende Schwenkkörper (12) um einen Winkel von 180° um die Schwenkachse (x) in die horizontale Offenstellung zurück verschwenkt wird und die ineinander liegenden Profile (40, 50) aus der Vorrichtung entfernt werden.

5. Verfahren nach Anspruch 4, wobei die beiden Profile (40, 50) stranggepresste Profile aus Aluminium oder einer Aluminiumlegierung sind.

6. Verfahren nach Anspruch 4 oder 5, wobei die ineinander liegenden Profile (40, 50) nach dem Entfernen aus der Vorrichtung in einen Glühkäfig (70) überführt werden.

7. Verfahren nach einem der Ansprüche 4 bis 6, wobei zur Vermeidung von Oberflächenbeschädigungen der Profile (40, 50) vor dem Verschwenken der beiden Schwenkkörper (12, 22) in die vertikale Schliessstellung flexible Schutzstreifen (60) zwischen die Profile (40, 50) eingelegt werden.

8. Verfahren nach Anspruch 7, wobei die flexiblen Schutzstreifen (60) Streifen aus einem textilen Material oder Kunststofffolienstreifen sind.
